# EUROPÄISCHE PATENTSCHRIFT

(11) **EP 1 336 241 B1**
(45) Veröffentlichungstag und Bekanntmachung des Hinweises auf die Patenterteilung: **19.01.2005**
(21) Anmeldenummer: 01997886.5
(22) Anmeldetag: 15.11.2001
(51) Int. Cl.: H02M 7/537, H02M 5/27

(54) **VERFAHREN ZUR STEUERUNG EINES MATRIXUMRICHTERS**
METHOD FOR CONTROLLING A MATRIX CONVERTER
PROCEDE DE COMMANDE D'UN CONVERTISSEUR MATRICIEL

(30) Priorität: 22.11.2000 DE 10057783
(43) Veröffentlichungstag der Anmeldung: 20.08.2003
(73) Patentinhaber: SIEMENS AKTIENGESELLSCHAFT, 80333 München (DE)
(72) Erfinder: SCHIERLING, Hubert, 91052 Erlangen (DE); SIMON, Olaf, 76646 Bruchsal (DE); BRUCKMANN, Manfred, 90475 Nürnberg (DE)
(86) Internationale Anmeldenummer: PCT/DE2001/004288
(87) Internationale Veröffentlichungsnummer: WO 2002/043234

(56) Entgegenhaltungen:
- US-A- 4 468 725
- US-A- 4 648 022
- US-A- 4 833 588
- US-A- 5 594 636
- US-A- 5 949 672
- Simon O.; Bruckmann M.; Schierling H.; Mahlein J.: 'Design of pulse patterns for matrix converters', EPE-PEMC 2002 Dubrovnik

## Beschreibung

Die Erfindung bezieht sich auf ein Verfahren zur Steuerung eines Matrixumrichters mit neun in einer 3x3-Schaltermatrix angeordneten bidirektionalen Leistungsschalter, wobei mittels eines Raumzeigermodulationsverfahren Schaltzustände einer Modulationsperiode jeweils mit zugehörigen Zeitspannen berechnet werden.

Bei einem Matrixumrichter handelt es sich um einen selbstgeführten Direktumrichter. Er ermöglicht die Umformung eines starren Drehstromnetzes in ein System mit variabler Spannung und Frequenz. Durch die Anordnung der bidirektionalen Leistungsschalter in einer 3x3-Schaltermatrix kann jeweils eine der drei Ausgangsphasen des Matrixumrichters elektrisch mit einer Eingangsphase verbunden werden. Eine Phase des Matrixumrichters besteht aus einer Anordnung aus drei bidirektionalen Leistungsschaltern, die einerseits jeweils mit einer Eingangsphase und andererseits mit einer Ausgangsphase verbunden sind. Eine derartige Anordnung wird auch als 3x1-Schaltermatrix bezeichnet. Der Matrixumrichter benötigt keinen Zwischenkreis. Der selbstgeführte Direktumrichter bietet den Vorteil, dass er bedingt durch die Topologie rückspeisefähig ist und durch eine entsprechend ausgeprägte Steuerung sinusförmige Netzströme erreicht.

Die bidirektionalen Leistungsschalter des Matrixumrichters weisen jeweils zwei antiseriell geschaltete Halbleiterschalter auf. Als Halbleiterschalter werden vorzugsweise Insulated-Gate-Bipolar-Transistoren (IGBT) verwendet, die jeweils eine antiparallele Diode aufweisen. Derartig ausgebildete bidirektionale Leistungsschalter werden vorzugsweise bei Umrichtern für kleine und mittlere Leistungen verwendet. Durch die Ansteuerung dieser Halbleiterschalter der bidirektionalen Leistungsschalter wird jeweils ein Strompfad in einer durch die Anordnung der Halbleiterschalter bestimmten Richtung durchgeschaltet. Sind beide Halbleiterschalter eines bidirektionalen Leistungsschalters angesteuert, so ist dieser bidirektional eingeschaltet und es wird ein Stromfluss in beide Richtungen ermöglicht. Dadurch entsteht eine sichere elektrische Verbindung zwischen einer Eingangs- und Ausgangsphase des Matrixumrichters. Wird nur ein Halbleiterschalter eines bidirektionalen Leistungsschalters angesteuert, so ist dieser unidirektional eingeschaltet und es entsteht eine elektrische Verbindung zwischen einer Eingangs- und Ausgangsphase des Matrixumrichters nur für eine bevorzugte Stromrichtung.

Durch eine gezielte zeitliche Abfolge von Schalterstellungskombinationen innerhalb einer Modulationsperiode kann im zeitlichen Mittel eine in Grenzen beliebige Ausgangsspannung erzeugt werden. Aufgabe einer Steuerung eines Matrixumrichters ist es, aus Kenntnis des Eingangs-Spannungs-Raumzeigers und einem Sollwert für den Ausgangs-Spannungs-Raumzeiger die geeignete Schaltkombination zu errechnen.

Bisher bekannte Steuerverfahren arbeiten entweder nach dem phasenorientierten oder dem raumzeigerorientierten Verfahren.

Das phasenorientierte Steuerverfahren ist in der Veröffentlichung "Analysis and Design of Optimum-Amplitude Nine-Switch Direct AC-AC Converters", von Alberto Alesina und Marco G.B. Venturini, abgedruckt in IEEE Transactions on Power Electronics, Band 4, Nr. 1, Januar 1989, Seiten 101 bis 112, näher beschrieben, wogegen in der Veröffentlichung "Space Vector Modulated Three-Phase to Three-Phase Matrix Converter with Input Power Factor Correction", von László Huber und Du 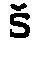 an Borojević, abgedruckt in IEEE Transaction on Industry Applications, Band 31, Nr. 6, Nov./Dez. 1995, Seiten 1234 bis 1245, ein raumzeigerorientiertes Steuerverfahren näher beschrieben ist. Das raumzeigerorientierte Steuerverfahren weist bezüglich des Schaltverlustverhaltens erhebliche Nachteile auf. Das schlechte Schaltverlustverhalten resultiert daraus, dass in der Ausgangsspannung und im Eingangsstrom Abschnitte existieren, die eine Pulsfrequenz entsprechend der Modulationsfrequenz, aber auch Abschnitte mit doppelter Pulsfrequenz, aufweisen.

Aus der Veröffentlichung "Space Vector Modulated Matrix Converter with Minimized Number of Switchings and a Feedforward Compensation of Input Voltage Unbalance", von P. Nielsen, F. Blaabjerg, J.K. Pedersen, abgedruckt in Proceedings of the 1996 International Conference on Power Electronics, Drives and Energy Systems for Industrial Growth, Seiten 833 bis 839, ist ein Verfahren zur Reduzierung von Kommutierungen bekannt. Bei diesem Verfahren werden mittels eines Raumzeiger-Modulationsverfahrens vier aktive Schaltzustände und ein Schaltzustand, der am Ausgang des Matrixumrichters einen Spannungs-Raumzeiger mit der Amplitude Null, erzeugt berechnet. In dieser Veröffentlichung werden diese Schaltzustände als aktive Vektoren oder als Nullvektor bezeichnet. Bei der Raumzeigermodulation eines Matrixumrichters kommt es vor, dass der Eingangs-Stromvektor und der Ausgangs-Spannungsvektor einerseits im selben Sektor andererseits in benachbarten Sektoren liegen. Neben diesen beschriebenen Kombinationen sind beliebige Kombinationen möglich. In allen Fällen wird die Pulsfrequenz, d.h. die Spannungs-Raumzeiger-Sequenz, in der Regel spiegelsymmetrisch aufgebaut, wobei der Nullvektor mittig zu den vier aktiven Vektoren angeordnet ist. Wenn der Eingangs-Stromvektor und der Ausgangs-Spannungsvektor des Matrixumrichters jeweils im selben Sektor liegen, so ergibt die Pulsfolge acht Kommutierungen. Liegen diese Vektoren jedoch in benachbarten Sektoren, so ergibt die Pulsfolge ohne Optimierung zehn Kommutierungen. Mit der in dieser Veröffentlichung vorgestellten Optimierung, wird in diesem Fall eine Pulsfolge erzeugt, die auch nur acht Kommutierungen aufweist. Die optimierte Pulsfolge wird aus den berechneten vier aktiven Vektoren und einem Nullvektor zusammengesetzt. Die optimierte Pulsfolge unterscheidet sich von der nicht optimierten Pulsfolge dadurch, dass die aktiven Vektoren zeitlich in der Pulsfolge vertauscht werden und ein geeigneter Nullvektor ausgewählt wird. Dabei wird von den drei möglichen Nullvektoren derjenige ausgewählt, der nur eine Kommutierung verursacht. Durch dieses optimierte Raumzeiger-Modulationsverfahren wird erreicht, dass pro Modulationsperiode immer nur acht Kommutierungen auftreten. Durch die Reduzierung der Anzahl der Kommutierungen pro Modulationsperiode werden die Schaltverluste des Matrixumrichters reduziert.

Dieses Steuerverfahren weist weiterhin noch einen Nachteil beim Schaltverlustverhalten auf, da die Optimierung des Raumzeiger-Modulationsverfahren nur die Anzahl der Kommutierungen berücksichtigt und nicht die Spannungen, bei der diese Kommutierungen auftreten.

Der Erfindung liegt nun die Aufgabe zugrunde, das bekannte Steuerverfahren hinsichtlich des Schaltverlustverhaltens weiter zu optimieren.

Diese Aufgabe wird erfindungsgemäß mit den kennzeichnenden Merkmal des Anspruchs 1 gelöst.

Dadurch, dass jeweils ein mittels eines Raumzeigers-Modulationsverfahren berechneter Schaltzustand des Matrixumrichters in ausgangsphasenbezogene Schaltzustände zerlegt wird, besteht nun die Möglichkeit, nachdem jedem ausgangsphasenbezogenen Schaltzustand eine zugehörige Zeitspanne zugeordnet ist, aus diesen ausgangsphasenbezogenen Schaltzuständen jeweils eine beliebige Pulsfolge getrennt für jede Ausgangsphase innerhalb einer Modulationsperiode zu generieren. In welcher Reihenfolge jeweils die ausgangsphasenbezogenen Schaltzustände aneinandergereiht werden, ist von den Eingangs-Spannungen abhängig. Die Sortierung der einzelnen Schaltzustände pro Ausgangsphase wird so vorgenommen, dass eine Folgekommutierung immer auf eine benachbarte Eingangsspannung erfolgt. Durch diese von den Eingangsspannungen optimierte Pulsfolge innerhalb einer Modulationsperiode verringern sich die Schaltverluste des Matrixumrichters erheblich.

Durch die ausgangsphasenbezogene Umsortierung berechneter Schaltzustände des Matrixumrichters entsteht ein Schaltzustand, der unter den ursprünglich berechneten Schaltzuständen einer Modulationsperiode nicht auftritt. Dieser Schaltzustand sorgt dafür, dass jede Ausgangsphase des Matrixumrichters mit einer anderen Eingangsphase verbunden wird, als die anderen Ausgangsphasen. Ein zugehöriger Ausgangs-Spannungs-Raumzeiger wird aufgrund seiner kreisförmigen Trajetorie als "rotatorischer Raumzeiger" bezeichnet. Ein derartiger Schaltzustand wird bei der Raumzeiger-Modulation aus Gründen einer zu kleinen maximalen Ausgangsspannung ausgeschlossen. Bei der Anwendung dieses erfindungsgemäßen Steuerverfahrens wird ein derartiger Schaltzustand jedoch innerhalb einer Modulationsperiode erzeugt, ohne diesen Nachteil aufzuweisen.

Zur weiteren Erläuterung der Erfindung wird auf die Zeichnung Bezug genommen, in der das erfindungsgemäße Verfahren schematisch veranschaulicht ist.
- FIG 1: zeigt ein Ersatzschaltbild eines Matrixumrichters, wobei in der
- FIG 2: eine Periode der Eingangsspannungen des Matrixumrichters nach FIG 1 in einem Diagramm über der Zeit t dargestellt ist,
- FIG 3: zeigt eine Tabelle von berechneten Schaltzuständen mit zugehörigen Zeitspannen, die
- FIG 4: zeigt die Tabelle nach FIG 3, die nach Ausgangsphasen aufgesplittert ist, wobei in den
- FIG 5 und 6: jeweils eine Tabelle mit ausgangsphasenbezogenen Schaltzuständen unterschiedlicher Pulsfolge dargestellt sind, und in der
- FIG 7: sind eine verkettete Ausgangsspannung und eine Phasenausgangsspannung bei nicht optimierter Raumzeigermodulation jeweils in einem Diagramm über der Zeit t dargestellt, wobei in der
- FIG 8: eine verkettete Ausgangsspannung und eine Phasenausgangsspannung bei erfindungsgemäßen Raumzeigermodulation jeweils in einem Diagramm über der Zeit t dargestellt sind.

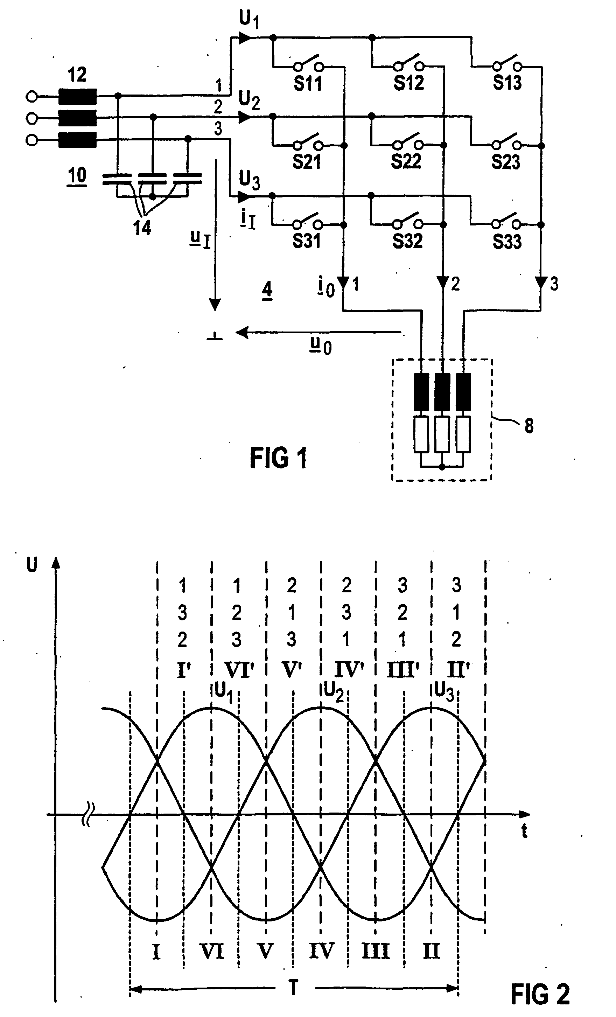

Die FIG 1 zeigt ein Ersatzschaltbild eines dreiphasigen Matrixumrichters 4. Dieser dreiphasige Matrixumrichter 4 weist neun bidirektionale Leistungsschalter S11,...,S33 auf, die einer 3x3-Schaltermatrix 6 angeordnet sind. Durch die Anordnung der neuen bidirektionalen Leistungsschalter S11,...,S33 in einer 3x3-Schaltermatrix 6 kann jede Ausgangsphase 1, 2, 3 an eine beliebige Eingangsphase 1, 2, 3 des Matrixumrichters 4 geschaltet werden. An den Ausgangsphasen 1, 2, 3 des Matrixumrichters 4 ist eine induktivitätsbelastete Last 8 angeschlossen. Die Eingangsphasen 1, 2, 3 sind mit einem LC-Filter 10 verknüpft, das eingangsseitig mit einem nicht näher dargestellten Netz verbunden ist. Dieses LC-Filter 10 weist Induktivitäten 12 und Kondensatoren 14 auf. Diese Kondensatoren 14 sind hier in Stern geschaltet, wobei eine Dreiecksschaltung auch möglich ist. Die Induktivitäten 12 sind in den Zuleitungen zu den Kondensatoren 14 angeordnet, so dass deren Ladeströme geglättet werden. Eine Phase dieses Matrixumrichters 4 weist drei bidirektionale Leistungsschalter S11, S21, S31 bzw. S12, S22, S32 bzw. S13, S23, S33 auf, die die Ausgangsphase 1 bzw. 2 bzw. 3 mit den Eingangsphasen 1, 2 und 3 verbinden können. Diese Matrixumrichterphase weist eine 3x1-Schaltermatrix auf.

In der FIG 2 sind in einem Diagramm über der Zeit t die an den Eingängen 1, 2 und 3 des Matrixumrichters 4 anstehenden Netzspannungen U₁, U₂, U₃ dargestellt. Von diesen Netzspannungen U₁, U₂, U₃ ist nur der zeitliche Verlauf einer Netzperiode T dargestellt. Diese Netzperiode T ist in sechs Sektoren I,...,VI gemäß der Raumzeigermodulation unterteilt. Jeder Sektor umfasst 60° el., wobei die Sektorengrenze jedes Mal mit einem Nulldurchgang einer Netzspannung U₁ bzw. U₂ bzw. U₃ zusammenfällt. Außerdem sind in diesem Diagramm weitere Sektoren I',..., VI' eingetragen, deren Sektorgrenzen immer mit einem Nulldurchgang einer verketteten Netzspannung zusammenfällt. Diese Sektoren I',..., VI' sind gegenüber den Sektoren I,...,VI um 30° el. verschoben. Die Zahlenfolge innerhalb der versetzt angeordneten Sektoren I',..., VI' gibt jeweils eine Kommutierungsfolge für den Matrixumrichter 4 an.

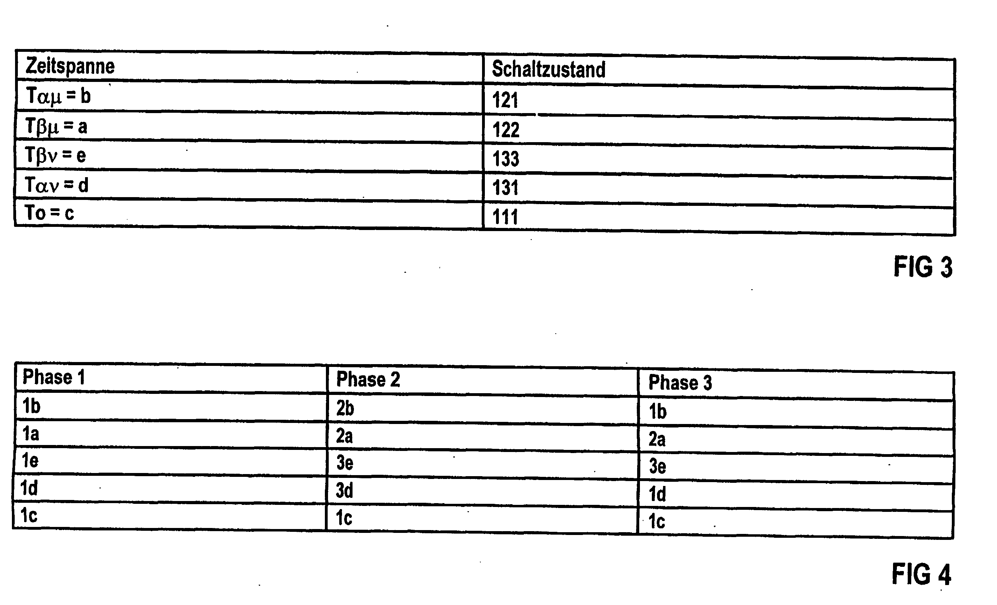

Die FIG 3 zeigt eine Tabelle mit zwei Spalten, nämlich eine Spalte "Zeitspanne" und eine Spalte "Schaltzustand". In dieser letztgenannten Spalte sind für eine Modulationsperiode bzw. für eine halbe Modulationsperiode vier aktive Schaltzustände 121, 122, 133 und 131 und ein Schaltzustand 111 eingetragen. Die aktiven Schaltzustände 121, 122, 133 und 131 generieren einen Ausgangsspannungs-Raumzeiger u₀ der verschieden von Null ist. Der Schaltzustand 111 generiert einen Ausgangsspannungs-Raumzeiger u₀ mit der Amplitude Null. Deshalb wird in der eingangs genannten Literatur in Verbindung mit der Raumzeigermodulation auch von aktiven Raumzeigern und Nullzeiger gesprochen.

Der Schaltzustand des Matrixumrichters 4 wird gemäß dieser Tabelle durch einen Zahlentripple, beispielsweise 122, beschrieben. Dazu gibt die erste Ziffer an, mit welcher Ein-. gangsphase die erste Ausgangsphase 1 des Matrixumrichters verbunden werden soll bzw. ist. Die zweite Ziffer gibt an, mit welcher Eingangsphase die zweite Ausgangsphase 2 des Matrixumrichters verbunden werden soll bzw. ist. Die dritte Ziffer gibt die Verbindung der dritten Ausgangsphase 3 des Matrixumrichters 4 mit einer Eingangsphase an. Das heißt, dass gemäß dem Schaltzustand 122 die erste Ausgangsphase 1 mit der Netzspannung U₁, die zweite Ausgangsphase 2 mit der Netzspannung U₂ und die dritte Ausgangsphase 3 des Matrixumrichters 4 mit der Netzspannung U₂ verbunden werden soll. Wie lange dieser Schaltzustand anstehen soll, gibt die zum Schaltzustand zugehörige Zeitspanne Tβµ = a an. Wenn der Schaltzustand 122 ausgeführt wird, so werden die bidirektionalen Leistungsschalter S11, S22, S23 geschlossen.

Die in der FIG 3 gezeigte Tabelle zeigt ein Rechenbeispiel aus der Veröffentlichung von Huber, Borojević, insbesondere die Tabelle III und die Abb. 9, welche unter der Annahme eines Eingangs-Leistungsfaktor cosϕ von Eins im Eingangsspannungssektor VI zustande kommt.

In der FIG 4 ist eine Tabelle dargestellt, die durch Aufsplittung der Tabelle nach FIG 3 entstanden ist. Das heißt, jeder Zahlentripple ist in seine drei Zahlen aufgeteilt und jeweils mit der zum Zahlentripple gehörenden Zeitspanne versehen. Somit erhält man ausgangsphasenbezogene Schaltzustände des Matrixumrichters 4.

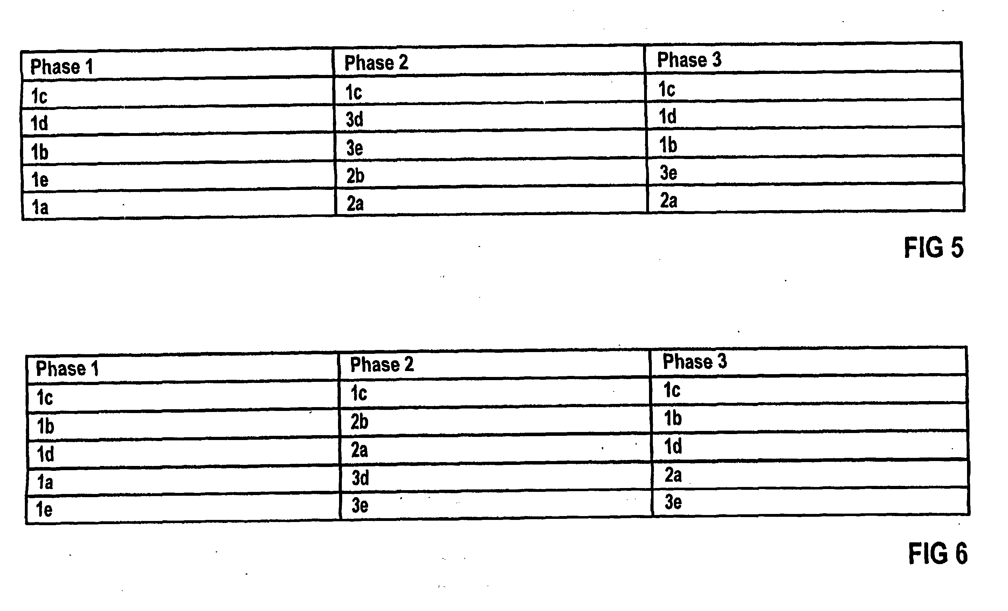

Nach der Aufsplittung der mittels eines Raumzeiger-Modulationsverfahrens berechneten Schaltzustände einer Modulationsperiode werden jeweils die ausgangsphasenbezogenen Schaltzustände in ihrer zeitlichen Abfolge (bezogen auf die Tabelle gemäß Figur 4 von oben nach unten) neu sortiert. Diese Sortierung geschieht mittels der erfassten Netzspannungen U₁, U₂, U₃, wobei darauf geachtet wird, dass eine Folgekommutierung immer nur auf die nächstliegende Netzspannung U₂ bzw. U₃ bzw. U₁ erfolgt. Gemäß der FIG 3 sind diese Schaltzustände für den Raumzeiger-Sektor VI unter der oben genannten Annahme gemäß der Veröffentlichung von Huber, Borojević berechnet worden. Gemäß dem Diagramm nach FIG 2 gehören zu dem Raumzeiger-Sektor VI die Sektoren I' und VI' mit den optimierten Kommutierungsfolgen 132 und 123. Die eine Pulsfolge 132 nach der Neusortierung ist in der FIG 5, wogegen die andere Pulsfolge 123 nach der Neusortierung in der FIG 6 dargestellt ist. Diese beiden Tabellen geben nun jeweils an, welche Ausgangsspannungs-Raumzeiger nach der Umsortierung entstehen.

Ein Vergleich der Schaltzustände gemäß der Tabelle nach FIG 3 mit Schaltzuständen gemäß der Tabelle 5, die pro Modulationsperiode eine 132-Kommutierungsfolge darstellt, kann man erkennen, dass die Schaltzustände 122a und 111c des Matrixumrichters 4 nach FIG 3 unverändert bleiben. Unter der Annahme, dass die Zeitspanne e größer als die Zeitspanne b ist, erscheint in der optimierten Kommutierungsfolge nach FIG 5 im Vergleich zur Kommutierungsfolge nach FIG 3 der Schaltzustand 123b. Ein derartiger Schaltzustand bewirkt, dass jede Ausgangsphase des Matrixumrichters 4 mit einer anderen Eingangsphase des Matrixumrichters 4 verbunden wird. Der Spannungs-Raumzeiger, der durch diesen Schaltzustand generiert wird, wird als sogenannter "rotierender Raumzeiger" bezeichnet. Der Vergleich der Kommutierungsfolgen gemäß FIG 3 und gemäß FIG 5 unter der oben genannten Annahme zeigt, dass die Zeitspanne e des Schaltzustandes 133 um die Zeitspanne b verkürzt wird, wogegen die Zeitspanne d des Schaltzustandes 131 um die Zeitspanne b verlängert wird.

Wird angenommen, dass die Zeitspanne b größer als die Zeitspanne e ist, erscheint in der optimierten Kommutierungsfolge nach FIG 5 im Vergleich zur Kommutierungfolge nach FIG 3 der Schaltzustand 123e, der wiederum ein "rotierender Raumzeiger" ist. Außerdem wird die Zeitspanne b des Raumzeigers 121 nach FIG 3 durch die Optimierung um die Zeitspanne e verkürzt, wogegen die Zeitspanne d des Schaltzustandes 131 nach FIG 3 um die Zeitspanne e verlängert wird.

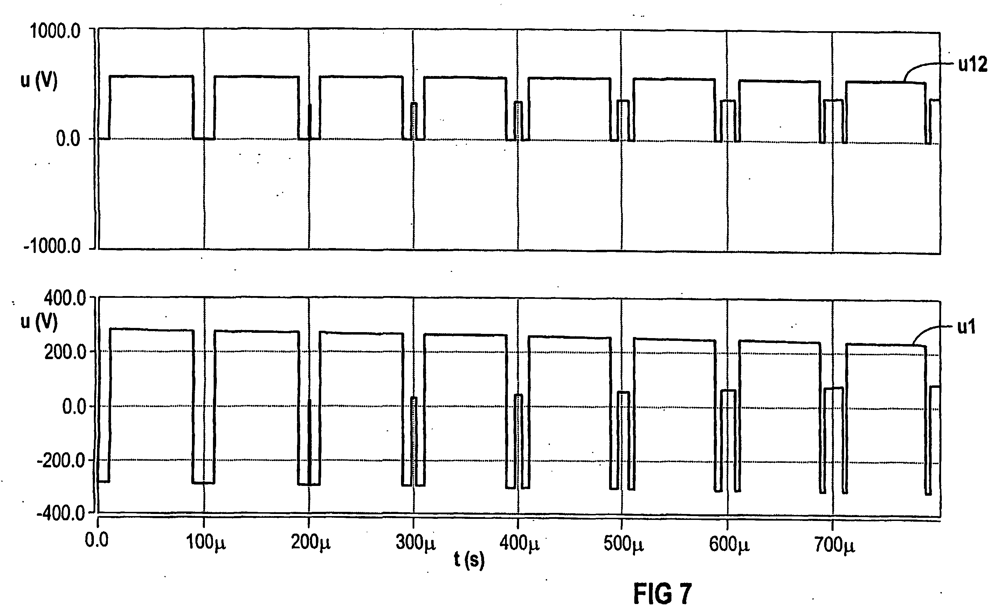

In der FIG 7 wird jeweils in einem Diagramm das Schaltverhalten einer verketteten Ausgangsspannung u₁₂ und einer Phasenausgangsspannung u₁ bezogen auf einen Eingangssternpunkt des Matrixumrichters 4 gezeigt, wobei das bekannte Raumzeiger-Modulationsverfahren verwendet worden ist. In der Zeitspanne zwischen 0 und 100 µsek. ist gemäß dieser Darstellung die Pulsfolge klein-groß-klein, wogegen in der Zeitspanne zwischen 700 und 800 µsek. die Pulsfolge groß-klein-groß-kleingroß ist. Die Pulsfolge in der Zeitspanne zwischen 0 und 100 µsek. entspricht einer Pulsfrequenz von etwa 10 kHz, wogegen die Pulsfolge in der Zeitspanne 700 bis 800 µsek. einer Pulsfrequenz von 20 kHz entspricht. Dies zeigt die prinzipielle Inhomogenität der Pulsfrequenz beim Raumzeiger-Modulationsverfahren herkömmlicher Art, die zu höheren Schaltverlusten führt.

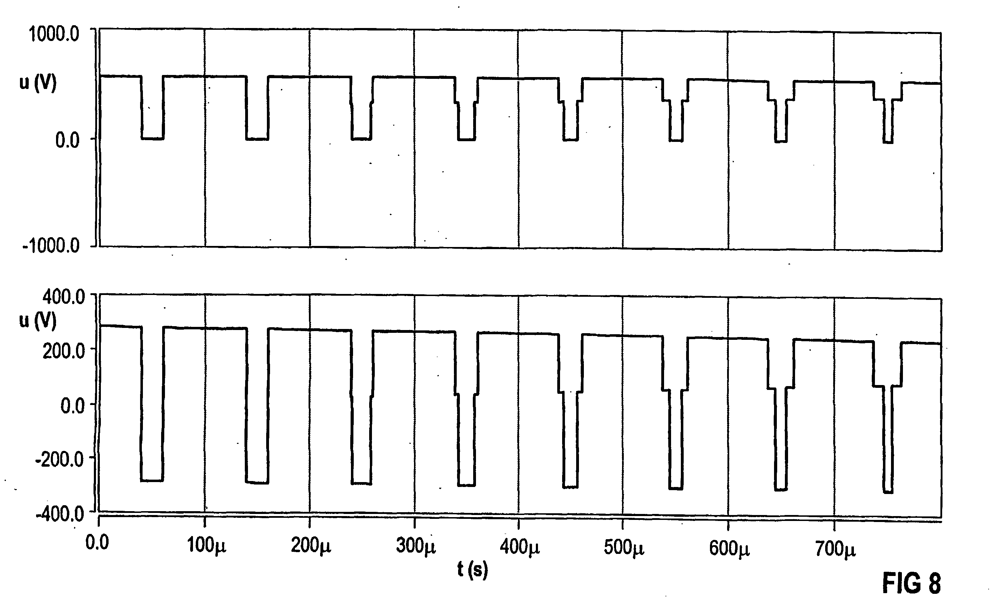

In der FIG 8 wird jeweils in einem Diagramm das Schaltverhalten einer verketteten Ausgangsspannung u₁₂ und einer Phasenausgangsspannung u₁ bezogen auf einen Eingangssternpunkt des Matrixumrichters 4 gezeigt, wobei das erfindungsgemäße Raumzeiger-Modulationsverfahren verwendet worden ist. Durch die Verwendung des erfindungsgemäßen Raumzeiger-Modulationsverfahrens ist die Pulsfolge in der Zeitspanne zwischen 0 und 100 µsek. mit der Pulsfolge in der Zeitspanne zwischen 700 und 800 µsek. identisch. Somit sind die Pulsfrequenz und Modulationsfrequenz gleich (hier: 10 kHz).

Mit Hilfe des erfindungsgemäßen Raumzeiger-Modulationsverfahrens für einen Matrixumrichter 4 wird erreicht, dass das Schaltverlustverhalten des Matrixumrichters 4 nicht nur durch eine Minimierung der Anzahl der Kommutierungen innerhalb einer Modulationsperiode verbessert werden kann, sondern auch dann, wenn nur der Einfluss der Kommutierungsspannung dabei berücksichtigt wird. Um die Schaltverluste eines Matrixumrichters 4 zu minimieren, können beide Optimierungsverfahren für ein Raumzeiger-Modulationsverfahren verwendet werden.

## Patentansprüche

1. Verfahren zur Steuerung eines Matrixumrichters (4) mit neun in der 3x3-Schaltermatrix (6) angeordneten bidirektionalen Leistungsschalter (S11,...,S33), wobei mittels eines Raumzeiger-Modulationsverfahrens Schaltzustände einer Modulationsperiode jeweils mit zugehörigen Zeitspannen (a,b,c,d,e) berechnet werden, **dadurch gekennzeichnet, dass** die berechneten Schaltzustände jeweils in ausgangsphasenbezogene Schaltzustände des Matrixumrichters (4) zerlegt werden, denen jeweils eine zugehörige Zeitspanne (a,b,c,d,e) zugeordnet wird, und dass in Abhängigkeit von ermittelten Eingangsspannungen (U₁, U₂, U₃) die ausgangsphasenbezogenen Schaltzustände mit zugehörigen Zeitspannen (a,b,c,d,e) derart zeitlich zu einer Pulsfolge einer Modulationsperiode zusammengesetzt werden, dass eine Folgekommutierung immer auf eine benachbarte Eingangsspannung (U₂ bzw. U₃ bzw. U₁) erfolgt.

## Claims

1. Method for controlling a matrix converter (4) with nine bidirectional power switches (S11,...,S33) arranged in a 3x3 switch matrix (6), whereby by means of a space vector modulation method switching states of a modulation period, each with corresponding time intervals (a,b,c,d,e), are calculated, **characterised in that** the calculated switching states are decomposed into corresponding output-phase-related switching states of the matrix converter (4), to which an associated time interval (a,b,c,d,e) is assigned in each case, and that in dependence on the measured input voltages (U₁, U₂, U₃) the output-phase-related switching states are combined with associated time intervals (a,b,c,d,e) to form a pulse sequence of a modulation period temporally so that a sequential commutation is always performed to an adjacent input voltage (U₂ or U₃ or U₁).

## Revendications

1. Procédé de commande d'un convertisseur (4) matriciel comportant neuf disjoncteurs (S11,...,S33) bidirectionnels montés dans la matrice (6) de disjoncteurs 3 x 3, dans lequel on calcule, au moyen d'un procédé de modulation par vecteur d'espace, des états de commutation d'une période de modulation, ayant respectivement des laps (a, b, c, d, e) de temps associés, **caractérisé en ce que** l'on décompose les états de commutation calculés respectivement en des états de commutation relatifs à la phase de sortie du convertisseur (4) matriciel, auxquels on associe respectivement un laps (a, b, c, d, e) de temps associé et **en ce que**, en fonction des tensions (U₁, U₂, U₃) d'entrée déterminées, on rassemble les états de commutation, relatifs à la phase de sortie et ayant des laps (a, b, c, d, e) de temps associés, de telle manière dans le temps en une séquence d'impulsions d'une période de modulation qu'une commutation de séquence s'effectue toujours sur une tension (U₂, ou U₃, ou U₁) d'entrée voisine.
